# EUROPÄISCHE PATENTSCHRIFT

(11) **EP 3 383 754 B1**
(45) Veröffentlichungstag und Bekanntmachung des Hinweises auf die Patenterteilung: **15.04.2020**
(21) Anmeldenummer: 16801383.7
(22) Anmeldetag: 23.11.2016
(51) Int. Cl.: B65G 51/06, B65D 33/25

(54) **KUPPLUNGSSYSTEM**
COUPLING SYSTEM
SYSTÈME DE COUPLAGE

(30) Priorität: 03.12.2015 DE 102015015856
(43) Veröffentlichungstag der Anmeldung: 10.10.2018
(73) Patentinhaber: FLECOTEC AG, 79410 Badenweler (DE)
(72) Erfinder: KOCH, Martin, 79395 Neuenburg (DE)
(74) Vertreter: Bartels, Martin Erich Arthur
(86) Internationale Anmeldenummer: PCT/EP2016/001976
(87) Internationale Veröffentlichungsnummer: WO 2017/092857

(56) Entgegenhaltungen:
- WO-A1-2014/106632
- DE-A1-102004 003 511
- US-A- 4 878 763
- US-A1- 2005 251 973

## Beschreibung

Die Erfindung betrifft ein Kupplungssystem zum medienführenden Verbinden von zwei schlauchartigen Streckenteilen zu einer gemeinsamen Transportstrecke, die jeweils ein Kupplungselement aufweisen, das zwei voneinander separierbare Kupplungsteile aufweist, die über Verschlusselemente entlang einer Trennstelle lösbar aneinandergehalten sind, die mit korrespondierend ausgebildeten Verschlusselementen des anderen Kupplungselements unter Bildung der Transportstrecke in Eingriff bringbar sind.

Durch die DE 10 2009 018 565 B3 ist ein gattungsgemäßes Kupplungssystem bekannt, das ein umweltdichtes Verbinden von schlauchartigen Streckenteilen in Form eines ersten Gebindes mit einem zweiten Gebinde ermöglicht, so dass eine geschlossene Andockposition einnehmbar ist und ein umweltdichtes Führen eines Mediendurchflusses entlang einer gemeinsamen Transportstrecke in einer Durchflussrichtung durch den Verschluss von dem ersten Gebinde in das zweite Gebinde hinein ermöglicht ist.

Das zweite Gebinde weist dem ersten Gebinde zugewandt einen identischen Verschluss auf, der zum Erreichen der geöffneten Andockposition in Eingriff mit dem Verschluss des ersten Gebindes bringbar ist. In dieser geöffneten Andockposition bilden die verbundenen Verschlüsse der Gebinde einen schlauchartigen Kanal für den Durchfluss des Schüttgutes als zu transportierendem Medium entlang der Durchflussrichtung der Transportstrecke aus. Dabei schließen die einander gegenüberliegend angeordneten Profilleisten als Bestandteil von Kupplungsteilen zuordenbarer Kupplungselemente das Gebinde zwischeneinander ein. Hierfür weisen die Profilleisten quer zu der Durchflussrichtung der Transportstrecke schlaucheinwärts gerichtete, aber teilweise auch schlauchauswärts ausgerichtete Verschlusselemente auf, wobei letztere dann ohne Weiteres von der Umgebungsseite aus her verschmutzen können und die dahingehende Verschmutzung wird ungewollt beim Kuppeln der Kupplungselemente miteinander in das Schlauchinnere getragen und kann dergestalt das Transportgut innerhalb der Transportstrecke verschmutzen, was insbesondere bei pharmazeutischen Anwendungen für das Kupplungssystem nicht tolerierbar ist. Darüber hinaus baut das bekannte Kupplungssystem aufgrund der Vielzahl an benötigten Verschlusselementen kompliziert auf und ist mithin teuer in der Herstellung.

Ein weiteres gattungsgemäßes Kupplungssystem ist durch die WO 2014/ 106632 A1 bekannt. Dieses bekannte Kupplungssystem bildet gleichfalls einen möglichen Verschluss mit zwei Profilleisten aus für eine mindestens teilweise flexible Gebindeanordnung zum umweltdichten Verbinden eines ersten mit einem zweiten Gebinde und zum umweltdichten Führen eines Durchflusses in einer Durchflussrichtung entlang einer gemeinsamen Transportstrecke durch den genannten Verschluss von dem ersten Gebinde in das zweite Gebinde hinein in einer geöffneten Andockposition des Kupplungssystems. Das zweite Gebinde weist dem ersten Gebinde zugewandt einen identischen Verschluss auf, der in der geöffneten Andockposition in Eingriff mit dem Verschluss des ersten Gebindes steht und gemeinsam mit dem Verschluss des ersten Gebindes einen Durchflusskanal für den Durchfluss in der Durchflussrichtung ausbildet, wobei die Profilleisten einander gegenüberliegend angeordnet das jeweilige Gebinde nach außen hin verschließen.

Im getrennten Zustand der genannten Verschlüsse ist ein schlaucheinwärts gerichtetes, überstehendes und schwenkbares Verschlusselement mit einem schlauchauswärts gerichteten Verschlusselement desselben Verschlusses im Eingriff, um dergestalt den jeweiligen Verschluss zu verschließen, wobei im angedockten Kupplungszustand der genannten Verschlüsse das schlaucheinwärts gerichtete, überstehende Verschlusselement mit einem schlauchauswärts gerichteten Verschlusselement des komplementären Verschlusses im Eingriff ist und somit die Verschlüsse mediendicht miteinander verbindet.

Auch bei dieser bekannten Verschluss- oder Kupplungssystemlösung sind Verschlusselemente am jeweiligen Kupplungsteil eines Kupplungselements schlauchauswärts zur Umgebung hin gerichtet und bieten somit die Möglichkeit der Anlagerung von Verschmutzungen, die im späteren Kupplungszustand in das Innere der schlauchartigen Transportstrecke ungewollt gelangen können. Da die vorgestellten, überstehenden Verschlusselemente zum Herstellen des Verschlusses hierfür schwenkbar ausgebildet sind, ist auch hier ein erhöhter Herstellaufwand notwendig, was die Kosten des Verschlusses erhöht.

Die DE 10 2004 003 511 A1, die US 4 878 763 und die US 2005/0251973 A1 beschreiben weitere Kupplungssysteme.

Ausgehend von dem vorstehend genannten Stand der Technik liegt der Erfindung die Aufgabe zugrunde, unter Beibehalten der Vorteile der bekannten Lösung, nämlich funktionssichere, umweltdichte Andocksysteme für schlauch- oder kanalartige Gebinde respektive Teilstrecken unter Bildung einer gemeinsamen Transportstrecke in zumindest einer Durchflussrichtung zu schaffen, dahingehend weiter zu verbessern, dass in jedem Fall beim Kuppeln der Teilsysteme über die Kupplungselemente kein Schmutzeintrag von außen nach innen in die medienführende Transportstrecke gelangen kann und dass eine kostengünstige Herstellung gewährleistet ist. Eine dahingehende Aufgabe löst ein Kupplungssystem mit den Merkmalen des Patentanspruchs 1 in seiner Gesamtheit.

Dadurch, dass gemäß dem kennzeichnenden Teil des Patentanspruchs 1 alle Verschlusselemente der Kupplungsteile zumindest vor Bildung der Transportstrecke schlaucheinwärts weisen, ist in jedem Fall sichergestellt, dass etwaige Verschmutzungen von der Umgebung stammend nicht über die Kupplungsteile ungewollt in das Innere der medienführenden Transportstrecke gelangen können, so dass insoweit ein hermetisch umweltdichter Verschluss erreicht ist, und zwar in jedem Zustand des Kupplungssystems mit seinen anzudockenden Kupplungsteilen.

Des Weiteren ist erfindungsgemäß vorgesehen, dass zumindest beim Herstellen der Transportstrecke die jeweilige Trennstelle zwischen den Kupplungselementen quer zu dieser Transportstrecke angeordnet ist. Aufgrund der dahingehenden Verbindungsanordnung quer zur eigentlichen Transportstrecke kommt die erfindungsgemäße Kupplungssystem-Lösung mit nur einer Art von miteinander zu koppelnden Verschlusselementen aus, wobei insgesamt die Anzahl an Verschlusselementen gering gehalten werden kann, was die Herstellkosten senken hilft. Darüber hinaus wird beim Herstellen der Transportstrecke vorzugsweise mittels eines eigens dafür konzipierten und von Hand betätigten Schiebers nahezu kräftefrei und sehr zügig die Durchlassverbindung oder Kopplung hergestellt, was zu geringen Montagezeiten führt und mithin die Montagekosten gleichfalls senken hilft.

Bei einer bevorzugten Ausführungsform des erfindungsgemäßen Kupplungssystems ist vorgesehen, dass die beiden voneinander separierbaren Kupplungsteile eines Kupplungselements aus Profilleisten gebildet sind und dass eine jede Profilleiste mit einer Bahn eines zuordenbaren Streckenteils verbunden ist, die mit der Bahn der anderen Profilleiste dieses einen Kupplungsteils das schlauchartige Streckenteil bildet. Mit dem dahingehenden Kupplungssystem lassen sich medienführend beliebige röhrenförmige Streckenteile unter Bildung der Gesamt-Transportstrecke miteinander verbinden, wobei unter den Begriff "schlauchartig" auch ohne Weiteres Röhrenverbindungen fallen mit geschlossener Außenumfangswand in der Art von Kanälen oder dergleichen. Das jeweilige schlauchartige Streckenteil kann dabei eine starre Röhre ausbilden oder ein flexibles Gebinde darstellen, auch mit elastisch nachgiebigen, röhrenförmig geschlossenen Wandteilen. Mit dieser Art von Verbindungen lässt sich auch in wieder lösbarer Weise eine sichere Kopplung oder ein Verschluss erreichen, der auch dann nicht aufgeht, wenn entsprechend unter Druck das Medium über die Transportstrecke zwischen den Kupplungselementen vorbeigeleitet wird.

Besonders bevorzugt ist vorgesehen, dass die jeweilige Profilleiste in Längsrichtung ihres Leistenverlaufs flexibel gestaltet und in Richtungen quer dazu derart eigenstabil ist, dass ein Aufeinanderlegen von Teilen der Profilleiste, zumindest im Bereich der Eintrittsebene der Verschlusselemente, ausgeschlossen ist. Im Gegensatz zu der bekannten Verschlusslösung nach der WO 2014/106632 A1 ist es somit möglich, anstelle von schwenkbaren Verschlusselementen eines Kupplungsteils eigenstabile Verschlusselemente einzusetzen, die dergestalt an der Stelle der späteren Verbindung der Kupplungsteile miteinander einen starren funktionssicheren Aufbau gewährleisten mit hohen Verschlusskräften der Verschlusselemente in diesem Bereich, die ein ungewolltes Lösen der Verbindung verhindern.

Bei einer weiteren besonders bevorzugten Ausführungsform des erfindungsgemäßen Kupplungssystems ist vorgesehen, dass in deren Ausgangszustand zumindest eine Profilleiste eines Profilleistenpaares je ein Kupplungselement in der Art eines Rücksprungs die Verschlusselemente entlang einer freien Ober- oder Stirnseite am Ende dieser Profilleiste aufweist und dass zwischen diesem Rücksprung und den dazu parallel verlaufenden Wandteilen der Profilleiste in diesem Ausgangszustand ein Kanal gebildet ist. Aufgrund des angesprochenen Kanals ist ein vorgebbarer Abstand von Verschlusselementen zu sonstigen Wandteilen der Profilleiste gebildet, wobei der Grund des Kanals eine Art Schwenkstelle ausbildet, die es ermöglicht, diese Profilleiste entlang einer Begrenzungsfläche aufzuspreizen, auch wenn diese in Eingriff ist mit einer benachbarten Profilleiste des weiteren Kupplungselements, so dass sich eine Art ebene Begrenzungswand für die Transportstrecke im Bereich der in Eingriff miteinander befindlichen Profilleisten als Verschluss ergibt, was einen störungsfreien, insbesondere hemmnisfreien Medientransport entlang der Transportstrecke in gekuppeltem Zustand ermöglicht.

In diesem Zusammenhang ist weiter besonders bevorzugt vorgesehen, dass der Kanal dieser Profilleiste einen nach außen vorspringenden Anlageabschnitt aufweist, an dem sich ein Verschlusselement der zuordenbaren Profilleiste eines Kupplungselements abstützt. Aufgrund dieser Abstützung kommt es auch im äußeren Randbereich der herzustellenden Verbindung zu einem sicheren Verschluss mit einer Krafteinleitung über den genannten Abschnitt, was die Verhaftungskräfte der Profilleisten aneinander erhöhen hilft.

Als besonders vorteilhaft hat es sich dabei erwiesen, die kanalfreie zuordenbare Profilleiste des Kupplungsverbundes in deren Ausgangszustand im Bereich ihres jeweiligen Verschlusselements mit einem Überstand gegenüber den sonstigen Wandteilen dieser Profilleiste zu versehen. Aufgrund dieses Überstandes in Verbindung mit dem kanalbildenden Rücksprung bei der anderen Profilleiste sind die miteinander in Eingriff befindlichen Verschlusselemente im Ausgangszustand der Kupplung insgesamt blockartig versetzt angeordnet, so dass diese sich in vereinfachter Weise miteinander verbinden, aber auch wieder voneinander trennen lassen.

Bei einer weiteren besonders bevorzugten Ausführungsform des erfindungsgemäßen Kupplungssystems ist vorgesehen, dass zum Herstellen der medienführenden Transportstrecke die paarweise einander zugeordneten Profilleisten eines jeden Kupplungselements entlang der gemeinsamen Trennstelle voneinander separierbar sind, um mit ihrem jeweils freigelegten Verschlusselement mit einem korrespondierenden Verschlusselement des Profilleistenpaares des anderen Kupplungselements derart zusammenzuwirken, dass benachbarte Bahnen eines jeden schlauchartigen Streckenabschnitts die gemeinsame Transportstrecke bilden.

Besonders bevorzugt ist hierbei vorgesehen, dass, sofern beim Herstellen der Transportstrecke die jeweilige Trennstelle der beiden Kupplungselemente quer zur erzeugenden Transportrichtung verläuft, die miteinander in Eingriff gebrachten Verschlusselemente parallel zur Transportstrecke angeordnet sind und dass die die jeweilige Trennstelle durchgreifenden Verschlusselemente von gegenüberliegenden Kupplungselementen in entgegengesetzte Richtungen weisen.

Aufgrund dieser umgekehrten Kopf-Fuß-Anordnung der Verschlusselemente lässt sich mittels einer mechanischen Verbindungseinrichtung, wie einem von Hand betätigbaren Schieber oder Gleiter, mit geringen Verschlusskräften der Verschluss herstellen, aber auch wieder auftrennen. Auch in dem Zustand der momentanen Transportstreckenerstellung sind die einzelnen Verschlusselemente der miteinander gekoppelten Kupplungselemente so angeordnet, dass sie in jedem Fall schlaucheinwärts weisen und Verschmutzungsteilen von außen her von der Umgebung kommend keine Angriffsfläche bieten, was zur Sterilität des Kupplungssystems und seines mit ihm zu transportierenden Mediums mit beiträgt. Auch dies hat so keine Entsprechung im Stand der Technik.

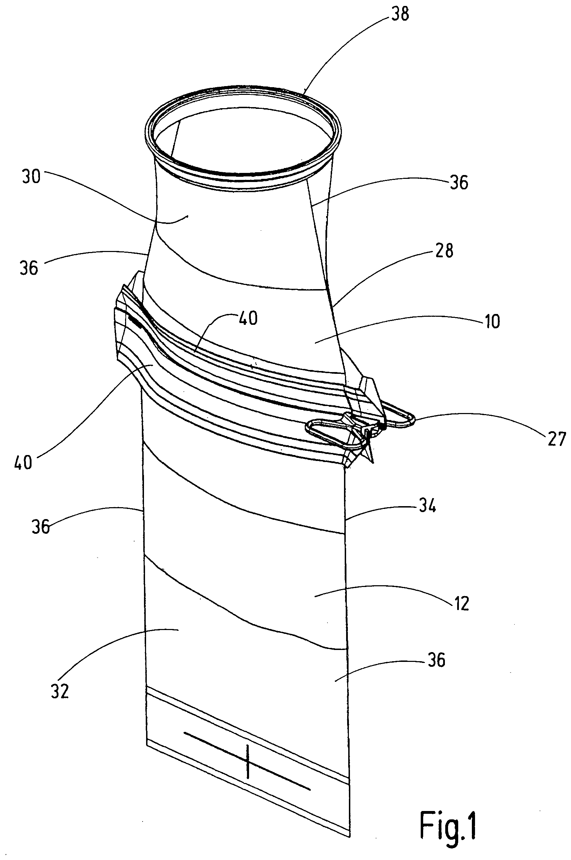

Im Folgenden wird das erfindungsgemäße Kupplungssystem anhand eines Ausführungsbeispieles nach der Zeichnung näher erläutert. Dabei zeigen in prinzipieller und nicht maßstäblicher Darstellung die
- Fig. 1: in der Art einer perspektivischen Schrägdarstellung das Kupplungssystem zum medienführenden Verbinden von zwei schlauchartigen Streckenteilen zu einer gemeinsamen Transportstrecke unter Verwendung eines sogenannten Gleiters; und

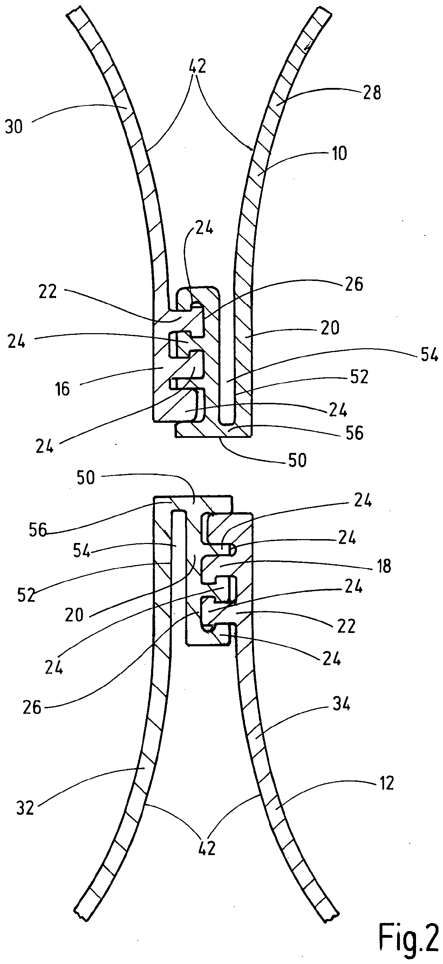

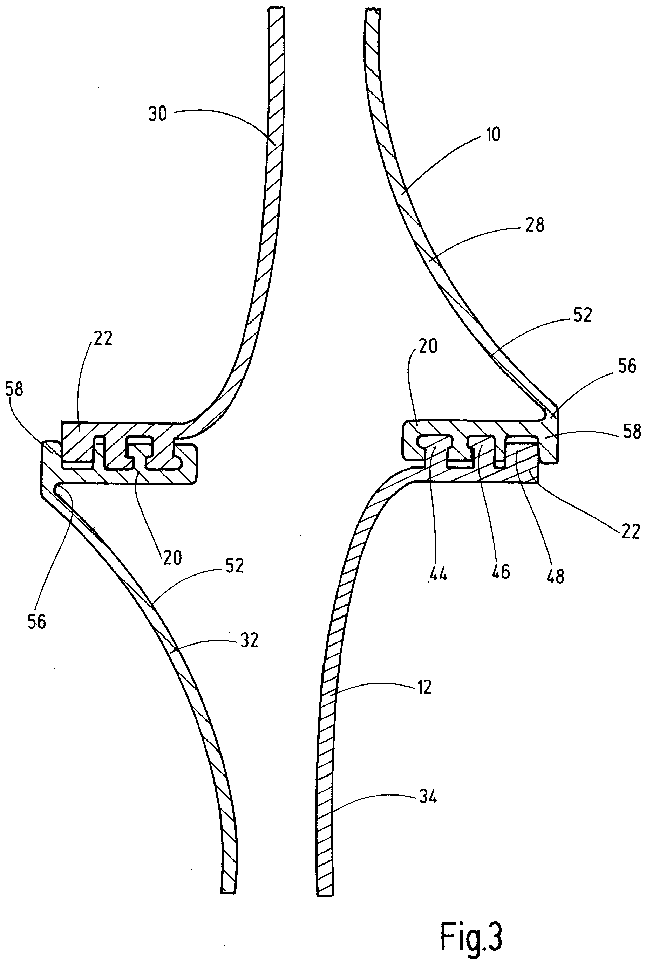

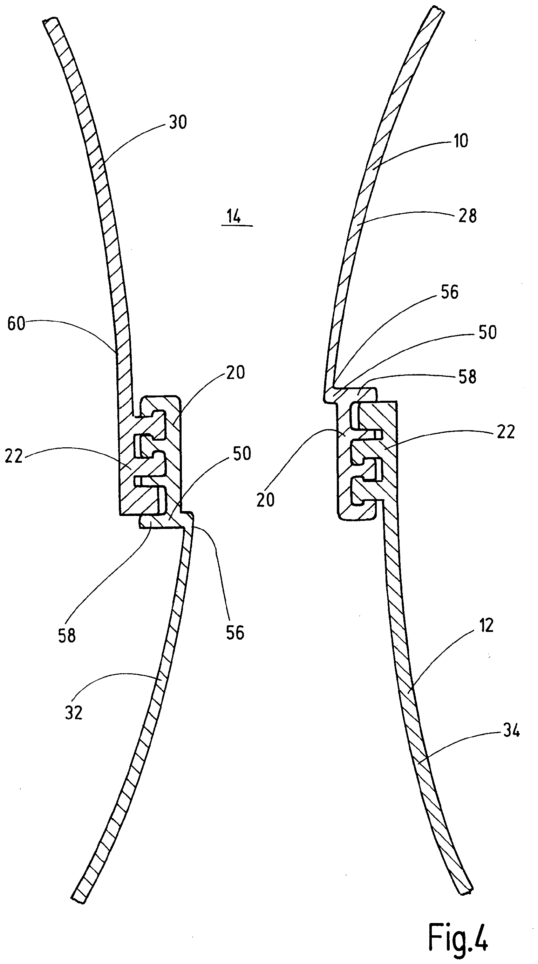

- Fig. 2 bis 4: in der Art einer jeweiligen Schnittdarstellung das erfindungsgemäße Kupplungssystem in verschiedenen Kupplungszuständen vom nicht gekuppelten Zustand (Fig. 2), über eine Zwischenkupplungsstellung (Fig. 3) bis zur vollständig gekuppelten Verbindungslösung, bei dem die beiden schlauchartigen Streckenteile medienführend zu der gemeinsamen Transportstrecke verbunden sind (Fig. 4).

Das erfindungsgemäße Kupplungssystem dient dem medienführenden Verbinden von zwei schlauchartigen Streckenteilen 10, 12 zwecks Erhalt einer gemeinsamen Transportstrecke 14, wie dies insbesondere in der Fig. 4 dargestellt ist. Das Kupplungssystem weist jeweils ein Kupplungselement 16, 18 auf, das zwei voneinander separierbare Kupplungsteile 20, 22 hat. Die beiden voneinander separierbaren Kupplungsteile 20, 22 weisen einzelne Verschlusselemente 24 auf, die entlang einer gemeinsamen Trennstelle 26 lösbar aneinander gehalten sind.

Die Streckenteile 10, 12 sind jeweils aus einem folienartigen Schlauch aus Kunststoffmaterial gebildet, von dem man in den Figuren 2 bis 4 im Schnitt dargestellt jeweils die Vorder- und die Rückseite 28, 30; 32, 34 in deren unterem Bereich sieht. Die dahingehend jeweiligen Vorder- und Rückseiten 28, 30; 32, 34 sind an ihren benachbart einander gegenüberliegenden Längs-Stirnseiten entlang von Verbindungslinien 36 einstückig miteinander verbunden, wobei insoweit der Bereich des Profileingriffs ausgenommen bleibt. Wie die Fig. 1 insbesondere zeigt, ist das obere schlauchartige Streckenteil 10 über einen kreisförmigen Aufnahmequerschnitt 38 offengehalten, über den sich der Schlauchverbund 10, 12 beispielsweise an eine nicht näher dargestellte Abfüllmaschine anschließen lässt. Dergestalt lässt sich bei geöffneter Kupplung gemäß den Darstellungen nach den Figuren 3 und 4 ein Füll- oder Transportgut über den Aufnahmequerschnitt 38 und das Streckenteil 10 in einen geöffneten Beutel als schlauchartiges Streckenteil 12 einfüllen, wobei sich nach erneutem Schließen der Kupplung (vgl. Fig. 2) der gefüllte Schlauchbeutel 12 in wieder geschlossener Form dann abnehmen lässt. Dergestalt lassen sich in Hintereinanderabfolge eine Vielzahl von schlauchartigen Beuteln als Streckenteile 12 in Hintereinanderfolge befüllen und verschließen. Anstelle der Beutelgestaltung kann jedoch das Streckenteil 12 vergleichbar dem Streckenteil 10 ausgebildet sein und mithin dem Weitertransport von Transportgut über die gemeinsame Transportstrecke 14 an eine weitere, nicht näher dargestellte maschinelle Aufnahmevorrichtung dienen, wobei dann das Streckenteil 12 an seiner Unter- oder Abgabeseite vergleichbar geöffnet ist wie das Streckenteil 10 auf seiner Aufnahmeseite.

Wie sich des Weiteren aus der Fig. 1 ergibt, sind die in den Figuren 2 bis 4 dargestellten Querschnitte der Kupplungsteile 20, 22 aus Profilleisten 40 gebildet, an denen vorzugsweise einstückig die zuordenbare Streckenteile 10, 12 aus Folienmaterial jeweils angreifen. Insbesondere sind die Kupplungsteile 20, 22 als Extrusionsbauteile einstückig mit den zuordenbaren Streckenteilen 10, 12 ausgebildet.

Eine wesentliche Besonderheit der Erfindung besteht darin, wie sich dies insbesondere aus der Darstellung nach den Figuren 2 bis 4 ergibt, dass im Gegensatz zu Lösungen im Stand der Technik in jedem Verbindungszustand des Kupplungssystems, also auch im nicht gekuppelten Zustand, die Verschlusselemente 24 immer auf der Innenseite 42 der Streckenteile 10, 12 zu liegen kommen, so dass diese nie der Umgebung zugewandt sind und ein Verschmutzungseintrag von der Umgebung her mit Sicherheit ausgeschlossen ist. Mithin weisen alle Verschlusselemente 24 der Kupplungsteile 20, 22 zumindest vor Bildung der Transportstrecke 14, besonders bevorzugt jedoch in jedem Kupplungszustand nach den Figuren 2 bis 4 schlaucheinwärts, wobei eine weitere erfindungsgemäße Besonderheit darin zu sehen ist, dass zumindest beim Herstellen der Transportstrecke 14 die jeweilige Trennstelle 26 gemäß der Darstellung nach der Fig. 3 zwischen den Kupplungselementen 16, 18 im Wesentlichen quer zu dieser Transportstrecke 14 angeordnet ist. Dergestalt lässt sich mit geringen Betätigungskräften gegebenenfalls auch von Hand ohne Weiteres die gewünschte Kupplung zum Herstellen der Kupplungsverbindung nach der Fig. 4 bewirken. Bevorzugt wird hierfür jedoch ein Gleiter 27 eingesetzt, wie er beispielhaft in der DE 10 2009 018 565 B3 aufgezeigt ist.

Wie bereits dargelegt, bestehen die beiden voneinander separierbaren Kupplungsteile 20, 22 eines jeden Kupplungselementes 16, 18 aus Profilleisten 40, und eine jede Profilleiste 40 ist mit einer Bahn eines zuordenbaren Streckenteiles 10, 12 verbunden, die aus den jeweiligen Vorder- und Rückseiten 28, 30; 32, 34 dieser Streckenteile 10 bzw. 12 gebildet ist. Wie sich des Weiteren aus den Figuren 2 bis 4 ergibt, ist die jeweilige Profilleiste 40 mit ihren Verschlusselementen 24 mit den Verschlusselementen 24 der anderen Profilleiste 40 eines Kupplungselementes 16 bzw. 18, die in der Art einer Feder-Nut-Verbindung oder einer Art Rastverbindung ausgebildet sind, miteinander verbunden.

In Blickrichtung auf die Fig. 2 gesehen werden sowohl für den oberen Streckenabschnitt 10 als auch für den unteren Streckenabschnitt 12 die jeweiligen Kupplungsteile 20, 22 unter Außereingriffbringen der korrespondierenden Verschlusselemente 24 voneinander gelöst und in Blickrichtung auf die Fig. 2 gesehen das obere, rechte Kupplungsteil 20 dann mit dem unteren, rechten Kupplungsteil 22 verbunden und das linke, obere Kupplungsteil 22 mit dem darunterliegend freigegebenen, ebenfalls linken Kupplungsteil 20, so dass sich, wie bereits erläutert, der Kupplungszustand als eine Art Zwischenkupplung nach der Fig. 3 ergibt, bei dem die jeweilige Trennstelle 26 quer zur vertikal ausgerichteten Transportstrecke 14 zwischen den beiden Streckenteilen 10, 12 verläuft.

Als Verschlusselemente 24 können Doppel-T-Profile 44, einseitig vorspringend ausgebildete Rasthaken 46 und eben verlaufende Führungsstege 48 dienen, die in korrespondierend ausgebildeten nutförmigen Rastausnehmungen als weitere Verschlusselemente 24 eingreifen, die insoweit das Gegenstück zum jeweils eingreifenden Kupplungsteil 20 oder 22 ausbilden. Die jeweilige Trennstelle 26 zwischen den beiden Kupplungsteilen 20, 22 soll dabei durch mindestens eine der Verbindungsebenen gebildet sein, an denen die benachbart gegenüberliegenden Verschlusselemente 24 eines Kupplungsteils 20 oder 22 in Anlage miteinander sind.

Wie sich des Weiteren aus der Fig. 1 ergibt, ist die jeweilige Profilleiste 40 in Längsrichtung ihres Leistenverlaufs flexibel gestaltet und in Richtung quer dazu ist sie derart eigenstabil, dass ein Aufeinanderlegen von Teilen der jeweiligen Profilleiste 40 zumindest im Bereich der Eingriffsebene, insbesondere in Form der Trennebene 26 der Verschlusselemente 24, vermieden ist. Dergestalt ist sichergestellt, dass nicht ungewollt nicht zueinander gehörige Kupplungsteile 16, 18 in Verbindung miteinander gebracht werden können.

Im gezeigten Ausgangszustand nach der Fig. 2 ist die Profilleiste 40 in Form des Kupplungsteiles 20 mit einer Art Rücksprung 50 versehen, und zwar entlang der freien Ober- oder Stirnseite am Ende dieser Profilleiste 40, wobei zwischen diesem Rücksprung 50 und den dazu parallel verlaufenden Wandteilen 52 dieser Profilleiste ein Kanal 54 gebildet ist. Diesem Kanal 54 kommt insofern Bedeutung zu, als beim Aufstellen der einzelnen Kupplungselemente 16, 18 unter Bildung des Transportweges 14 dieser mit dazu dient, eine Gelenkstelle 56 auszubilden, die es ermöglicht, dass die Streckenteile 10, 12 sich dergestalt aufrichten können, dass eine Verlängerung dieses Profilquerschnitts erreicht ist, um dergestalt eine ungestört verlaufende Transportstreckenführung zu erreichen (s. Fig. 4). Sofern die Streckenteile 10, 12 im gekuppelten Zustand nach der Fig. 4 unter Zugspannung gelangen sollten, wird darüber hinaus eine sichere Krafteinleitung über die korrespondierenden Verschlusselemente 24 in die Kupplungselemente 16, 18 erreicht. Des Weiteren wird erreicht, dass der Kanal 54 dieser Profilleiste in Form des Kupplungsteils 20 einen nach außen vorspringenden Anlageabschnitt 58 aufweist, an dem sich ein Verschlusselement 24 der zuordenbaren Profilleiste 40 in Form des korrespondierenden Kupplungsteiles 22, hier gebildet durch einen Führungssteg 48, abstützen kann. Dies erhöht die Eingriffssicherheit der Kupplungselemente 16, 18.

Weiter begünstigt wird dieser Aufbau noch dadurch, dass im Ausgangszustand die kanalfrei zuordenbare Profilleiste 40 in Form des Kupplungsteiles 22 im Bereich ihres jeweiligen Verschlusselementes 24 einen Überstand gegenüber den sonstigen Wandteilen 60 dieser Profilleiste 40 aufweist. Auf diese Art und Weise ist ein kräftefreier Eingriff der Kupplungsteile 20, 22 zueinander erreicht, und evtl. an den Streckenteilen 10, 12 angreifende Zugkräfte gefährden nicht den funktionssicheren Eingriff der zuordenbaren Verschlusselemente 24 im Bereich ihres gemeinsamen Eingriffs entlang der jeweiligen Trennstelle 26.

Zum Herstellen der medienführenden Transportstrecke 14 sind die paarweise einander zugeordneten Profilleisten 40 eines jeden Kupplungselementes 16, 18 entlang der gemeinsamen Trennstelle 26 ausgehend von dem nicht gekuppelten Zustand nach der Fig. 2 voneinander separierbar, um mit ihrem jeweils freigelegten Verschlusselement 26 mit einem korrespondierenden Verschlusselement 24 des Profilleistenpaares 40 des anderen Kupplungselementes 18 bzw. 16 derart zusammenzuwirken, dass benachbarte Bahnen eines jeden schlauchartigen Streckenabschnittes 10, 12 die gemeinsame Transportstrecke 14 miteinander bilden, wie dies im endgekuppelten Zustand nach der Fig. 4 dargestellt ist.

Sofern gemäß der Darstellung nach der Fig. 3 beim Herstellen der gemeinsamen Transportstrecke 14 die jeweilige Trennstelle 26 der beiden Kupplungselemente 16, 18 quer zur erzeugenden Transportrichtung 14 verläuft, sind die miteinander in Eingriff gebrachten Verschlusselemente 24 parallel zur Transportstrecke 14 angeordnet, wobei die die jeweilige Trennstelle 26 durchgreifenden Verschlusselemente 24 von gegenüberliegenden Kupplungselementen in entgegengesetzte Richtungen (Kopf-Fuß-Anordnung) weisen. Sowohl bei einem Öffnen oder Schließen der Kupplung bei einer horizontal verlaufenden Verbindungsanordnung nach der Fig. 3 als auch bei einer Art maschinellem Verbinden mittels eines von Hand betätigbaren Schiebers oder Gleiters 27, was auch automatisiert erfolgen kann, sind nur geringe Betätigungskräfte notwendig, was das funktionsgemäße Erstellen der Kupplung in jeder Einbausituation vereinfacht.

Gegenstand der Erfindung ist auch eine Verbindungseinrichtung mit dem vorzugsweise von Hand betätigbaren Schieber oder Gleiter 27, der zur Aufnahme der einzelnen Kupplungselemente 16, 18 des Kupplungssystems hierfür einzelne Kammern aufweist mit einer Schiebeführung, die Paare von Kupplungselementen 16, 18 mit ihren schlauchartigen Teilstrecken 10, 12 trennt, um sie unter Bildung der Transportstrecke 14 mit einem korrspondierenden Paar von Kupplungselementen 18 bzw. 16 des Kupplungssystems vorzugsweise in wieder lösbarer Weise zu verbinden.

## Patentansprüche

1. Kupplungssystem zum medienführenden Verbinden von zwei schlauchartigen Streckenteilen (10, 12) zu einer gemeinsamen Transportstrecke (14), die jeweils ein Kupplungselement (16, 18) aufweisen, das zwei voneinander separierbare Kupplungsteile (20, 22) aufweist, die über Verschlusselemente (24) entlang einer Trennstelle (26) lösbar aneinandergehalten sind, die mit korrespondierend ausgebildeten Verschlusselementen (24) des anderen Kupplungselements (16, 18) unter Bildung der Transportstrecke (14) in Eingriff bringbar sind, **dadurch gekennzeichnet, dass** alle Verschlusselemente (24) der Kupplungsteile (20, 22) zumindest vor Bildung der Transportstrecke (14) schlaucheinwärts weisen und dass zumindest beim Herstellen der Transportstrecke (14) die jeweilige Trennstelle (26) zwischen den Kupplungselementen (16, 18) quer zu dieser Transportstrecke (14) angeordnet ist.

2. Kupplungssystem nach Anspruch 1, **dadurch gekennzeichnet, dass** die beiden voneinander separierbaren Kupplungsteile (20, 22) eines Kupplungselements (16, 18) aus Profilleisten (40) gebildet sind und dass eine jede Profilleiste (40) mit einer Bahn eines zuordenbaren Streckenteils (10, 12) verbunden ist, die mit der Bahn der anderen Profilleiste dieses einen Kupplungsteils (20, 22) das schlauchartige Streckenteil (10, 12) bildet.

3. Kupplungssystem nach Anspruch 2, **dadurch gekennzeichnet, dass** die jeweilige Profilleiste (40) mit ihren Verschlusselementen (24) mit den Verschlusselementen (24) der anderen Profilleiste (40) eines Kupplungselements (16, 18) eine Art Feder-Nut-Verbindung oder eine Art Rastverbindung eingeht.

4. Kupplungssystem nach Anspruch 2 oder 3, **dadurch gekennzeichnet, dass** die jeweilige Profilleiste (40) in Längsrichtung ihres Leistenverlaufs flexibel gestaltet und in Richtungen quer dazu derart eigenstabil ist, dass ein Aufeinanderlegen von Teilen der Profilleiste (40) zumindest im Bereich der Eingriffsebene der Verschlusselemente (24) ausgeschlossen ist.

5. Kupplungssystem nach einem der Ansprüche 2 bis 4, **dadurch gekennzeichnet, dass** in deren Ausgangszustand zumindest eine Profilleiste (40) eines Profilleistenpaares für ein Kupplungselement (20) in der Art eines Rücksprungs (50) die Verschlusselemente (24) entlang einer freien Ober- oder Stirnseite am Ende dieser Profilleiste (40) aufweist und dass zwischen diesem Rücksprung (50) und den dazu parallel verlaufenden Wandteilen (52) der Profilleiste ein Kanal (54) gebildet ist.

6. Kupplungssystem nach Anspruch 5 **dadurch gekennzeichnet, dass** der Kanal (54) dieser Profilleiste (40) einen nach außen vorspringenden Anlageabschnitt (58) aufweist, an dem sich ein Verschlusselement (24) der zuordenbaren Profilleiste (40) eines Kupplungselements (16, 18) abstützt.

7. Kupplungssystem nach einem der Ansprüche 2 bis 6, **dadurch gekennzeichnet, dass** in deren Ausgangszustand die kanalfreie zuordenbare Profilleiste (40) im Bereich ihres jeweiligen Verschlusselements (24) einen Überstand gegenüber den sonstigen Wandteilen (60) dieser Profilleiste (40) aufweist.

8. Kupplungssystem nach einem der vorstehenden Ansprüche, **dadurch gekennzeichnet, dass** zum Herstellen der medienführenden Transportstrecke (14) die paarweise einander zugeordneten Profilleisten (14) eines jeden Kupplungselements (16, 18) entlang der gemeinsamen Trennstelle (26) voneinander separierbar sind, um mit ihrem jeweils freigelegten Verschlusselement (24) mit einem korrespondierenden Verschlusselement (24) des Profilleistenpaares des anderen Kupplungselements (18, 16) derart zusammenzuwirken, dass benachbarte Bahnen eines jeden schlauchartigen Streckenabschnitts (10, 12) die gemeinsame Transportstrecke (14) bilden.

9. Kupplungssystem nach einem der vorstehenden Ansprüche, **dadurch gekennzeichnet, dass**, sofern beim Herstellen der Transportstrecke (14) die jeweilige Trennstelle (26) der beiden Kupplungselemente (16, 18) quer zur erzeugenden Transportrichtung (14) verläuft, die miteinander in Eingriff gebrachten Verschlusselemente (24) parallel zur Transportstrecke (14) angeordnet sind und dass die die jeweilige Trennstelle (26) durchgreifenden Verschlusselemente (24) von gegenüberliegenden Kupplungselementen (16, 18) in entgegengesetzte Richtungen weisen.

10. Verbindungseinrichtung mit einem Kupplungssystem nach einem der vorstehenden Ansprüche, und mit einem vorzugsweise von Hand betätigbaren Schieber (27), der zur Aufnahme der einzelnen Kupplungselemente (16, 18) des Kupplungssystems nach einem der vorstehenden Ansprüche einzelne Kammern aufweist mit einer Schiebeführung, die Paare von Kupplungselementen (16, 18) mit ihren schlauchartigen Teilstrecken (10, 12) trennt, um sie unter Bildung der Transportstrecke (14) mit einem korrespondierenden Paar von Kupplungselementen (18, 16) des Kupplungssystems vorzugsweise in wieder lösbarer Weise zu verbinden.

## Claims

1. Coupling system for connecting two tubular section parts (10, 12) in a media-conveying manner to form a combined transport section (14), each tubular section part comprising a coupling element (16, 18), which comprises two coupling parts (20, 22) that can be separated from one another and which are detachably held together by means of fastening elements (24) along a separation joint (26), said coupling elements being able to be engaged with correspondingly shaped fastening elements (24) of the other coupling element (16, 18) to form the transport section (14), **characterised in that** all fastening elements (24) of the coupling parts (20, 22) are directed towards the inside of the tube at least before the transport section (14) is formed and **in that** the respective separation joint (26) between the coupling elements (16, 18) is arranged transversely with respect to this transport section (14) at least when manufacturing the transport section (14).

2. Coupling system according to claim 1, **characterised in that** the two coupling parts (20, 22) of a coupling element (16, 18) that can be separated from one another are made from profile strips (40) and **in that** each profile strip (40) is connected to a web of an assignable section part (10, 12), said web forming the tubular section part (10, 12) with the web of the other profile strip of this one coupling part (20, 22).

3. Coupling system according to claim 2, **characterised in that** the respective profile strip (40) with its fastening elements (24) engages in a kind of tongue-and-groove connection or a kind of latch connection with the fastening elements (24) of the other profile strip (40).

4. Coupling system according to either claim 2 or claim 3, **characterised in that** the respective profile strip (40) is designed to be flexible in the longitudinal direction of the strip and is inherently stable in directions transverse to said longitudinal direction such that it is not possible to place portions of the profile strip on top of one another at least in the region of the engagement plane of the fastening elements (24).

5. Coupling system according to any one of claims 2 to 4, **characterised in that**, in its original state, at least one profile strip (40) of a pair of profile strips for a coupling element (20) in the form of a return (50) comprises the fastening elements (24) along a free upper or end face at the end of this profile strip (40) and **in that** a channel (54) is formed between this return (50) and the wall portions (52) of the profile strip running parallel to said return.

6. Coupling system according to claim 5, **characterised in that** the channel (54) in this profile strip (40) comprises a positioning portion (58) protruding outwards, on which a fastening element (24) from the assignable profile strip (40) of a coupling element (16, 18) is supported.

7. Coupling system according to any one of claims 2 to 6, **characterised in that**, in its original state, the assignable profile strip (40) without a channel comprises a projection in relation to the other wall portions (60) of this profile strip in the region of its respective fastening element (24).

8. Coupling system according to any one of the preceding claims, **characterised in that**, to manufacture the media-conveying transport section (14), the profile strips (14) of each coupling element (16, 18), which are assigned in pairs in relation to one another, can be separated from each other along the shared separation joint (26) so that their exposed fastening element (24) in each case can interact with a corresponding fastening element (24) of the profile strip pair of the other coupling element (18, 16) in such a way that adjacent webs of each tubular section portion (10, 12) form the combined transport section (14).

9. Coupling system according to any one of the preceding claims, **characterised in that**, if, when manufacturing the transport section (14), the respective separation joint (26) of the two coupling elements (16, 18) runs transversely with respect to the transport direction to be created, the fastening elements (24) that have been engaged with each other are arranged parallel to the transport section (14) and **in that** the fastening elements (24) of opposite coupling elements (16, 18) gripping through the respective separation joint (26) are directed in opposite directions.

10. Connecting device with a coupling system according to any one of the preceding claims, and with a slider (27), which can preferably be activated by hand, which comprises individual chambers to receive the individual coupling elements (16, 18) of the coupling system according to any one of the preceding claims with a slide guide that separates pairs of coupling elements (16, 18) with their tubular section parts (10, 12) so as to connect them, preferably in a detachable manner, with a corresponding pair of coupling elements (18, 16) of the coupling system to form the transport section (14).

## Revendications

1. Système de raccordement pour la liaison conduisant des milieux de deux parties (10, 12) de ligne de type à tube souple en une ligne (14) de transport commune, qui ont chacune un élément (16, 18) de raccordement, ayant deux parties (20, 22) de raccordement pouvant être séparées l'une de l'autre et maintenues l'une contre l'autre de manière amovible le long d'un emplacement de séparation, par des éléments (24) de fermeture, qui peuvent être mis, en prise en formant la ligne (14) de transport avec des éléments (24) de fermeture constitués de manière correspondante de l'autre élément (16, 18) de raccordement, **caractérisé en ce que** tous les éléments (24) de fermeture des parties (20, 22) de raccordement sont tournés, au moins avant la formation de la ligne (14) de transport, vers l'intérieur du tube souple, et **en ce que**, au moins à la production de la ligne (14) de transport, l'emplacement (26) respectif de séparation entre les éléments (16, 18) de raccordement est disposé transversalement à cette ligne (14) de transport.

2. Système de raccordement suivant la revendication 1, **caractérisé en ce que** les deux parties (20, 22) de raccordement, pouvant être séparées l'une de l'autre d'un élément (16, 18) de raccordement sont formées de baguettes (40) profilées et **en ce que** l'une de chaque baguette profilée est reliée à un chemin d'une partie (10, 12) de ligne, qui peut être associée et qui forme, avec le chemin de l'autre baguette profilée de cette une partie (20, 22) de raccordement, la partie (10, 12) de ligne de type à tube souple.

3. Système de raccordement suivant la revendication 2, **caractérisé en ce que** la baguette (40) profilée entre, par ses éléments (24) de fermeture, dans une liaison du type à rainure et clavette ou dans une liaison du type à encliquetage, avec les éléments (24) de fermeture de l'autre baguette (40) profilée d'un élément (16, 18) de raccordement.

4. Système de raccordement suivant la revendication 2 ou 3, **caractérisé en ce que** la baguette (40) profilée respective est conformée souple dans la direction longitudinale de son tracé et a une stabilité propre dans des directions transversalement à celle-ci, **en ce qu'**une superposition de partie des baguettes (40) profilées est exclue, au moins dans la région du plan de pénétration des éléments (24) de fermeture.

5. Système de raccordement suivant l'une des revendications 2 à 4, **caractérisé en ce que**, dans son état initial, au moins une baguette (40) profilée, d'une paire de baguettes profilées pour un élément (20) de raccordement, a, à la manière d'un ressaut (50), les éléments (24) de fermeture le long d'un côté libre supérieur ou frontal à l'extrémité de cette baguette (40) profilée et **en ce que**, entre ce ressaut (50) et les parties (52) de paroi s'y étendant parallèlement de la baguette profilée, est formé un canal (54).

6. Système de raccordement suivant la revendication 5, **caractérisé en ce que** le canal (54) de cette baguette (40) profilée a une partie (58) de contact faisant saillie vers l'extérieur, sur laquelle s'appuie un élément (24) de fermeture de la baguette (40) profilée pouvant être associée d'un élément (16, 18) de raccordement.

7. Système de raccordement suivant l'une des revendications 2 à 6, **caractérisé en ce que**, dans son état initial, la baguette (40) profilée pouvant être associée sans canal a, dans la région de son élément (24) de fermeture respectif, un dépassement par rapport aux autres parties (60) de paroi de cette baguette (40) profilée.

8. Système de raccordement suivant l'une des revendications précédentes, **caractérisé en ce que**, pour obtenir la ligne (14) de transport conduisant des milieux, les baguettes (14) profilées, pouvant être associées l'une à l'autre par paire de l'un des éléments (16, 18) de raccordement, peuvent être séparées l'une de l'autre le long de l'emplacement (26) de séparation et coopérer, par leur élément de fermeture respectif mis à découvert, avec un élément (24) de fermeture correspondant de la paire de baguettes profilées de l'autre élément (18, 16) de raccordement, **en ce que** des chemins voisins de chaque partie (10, 12) de ligne de type en tube souple forment la ligne (14) de transport commune.

9. Système de raccordement suivant l'une des revendications précédentes, **caractérisé en ce que**, dans la mesure où, lors de la production de la ligne (14) de transport, l'emplacement (26) de séparation respectif des deux éléments (16, 18) de raccordement s'étend transversalement à la direction (14) de transport à produire, les éléments (24) de fermeture à mettre en prise l'un avec l'autre sont disposés parallèlement à la ligne (14) de transport et **en ce que** les éléments (24) de fermeture, traversant l'emplacement (26) séparation respectif, d'éléments (16, 18) de raccordement opposés, sont tournés en sens contraire.

10. Dispositif de liaison, ayant un système de raccordement suivant l'une des revendications précédentes, et comprenant un coulisseau (27), qui sépare la paire d'éléments (16, 18) de raccordement par leurs lignes (10, 12) partielles du type à tube souple, pour les relier, de préférence de manière redétachable en formant la ligne (14) de transport à une paire correspondante d'éléments (18, 16) de raccordement du système de raccordement.
